# EUROPEAN PATENT SPECIFICATION

(11) **EP 3 370 583 B1**
(45) Date of publication and mention of the grant of the patent: **25.01.2023**
(21) Application number: 16788544.1
(22) Date of filing: 01.11.2016
(51) Int. Cl.: A47J 31/18, A47J 31/40, A47J 31/44, A47J 31/06

(54) **A COFFEE MACHINE USED WITH A CAPSULE**
KAFFEEMASCHINE ZUR VERWENDUNG MIT EINER KAPSEL
MACHINE À CAFÉ UTILISANT UNE CAPSULE

(30) Priority: 06.11.2015 TR 201513942
(43) Date of publication of application: 12.09.2018
(73) Proprietor: Arçelik Anonim Sirketi, 34445 Istanbul (TR)
(72) Inventor: ALPTEKIN, Ahmet, 34950 Istanbul (TR); GUNDUZ, Nihat, 34950 Istanbul (TR); CENGIZ, Osman, 34950 Istanbul (TR); AYAROGLU, Emre, 34950 Istanbul (TR); COBAN, Omer, Burak, 34950 Istanbul (TR); GERZELI, Ismail, 34950 Istanbul (TR); KARTAL, Resul, 34950 Istanbul (TR)
(86) International application number: PCT/EP2016/076276
(87) International publication number: WO 2017/076823

(56) References cited:
- WO-A1-2016/089328
- WO-A1-2016/193381
- WO-A2-2012/125032
- DE-A1-102006 002 511
- US-A1- 2009 007 793

## Description

The present invention relates to a coffee machine that is suitable for use with a capsule that comprises single use coffee.

Use of single-use capsules containing coffee in coffee machines is known. In this type of machines, the capsule is placed to a housing disposed in the upper portion of the body of the machine, and the coffee in the capsule is transferred to a brewing chamber that is disposed in the lower portion of the housing by the capsule being blown/opened. The coffee in the brewing chamber is mixed with water and heated by a heater preferably disposed under the brewing chamber. The brewed coffee can be automatically transferred to a cup or can be transferred by the user to a cup. One of the problems encountered in this type of coffee machines is that the coffee inside the capsule cannot be fully discharged. One of the reasons of this situation is that the coffee that has thin, small particles such as the Turkish coffee sticks/holds on the capsule base and side surfaces. This situation affects the taste of the coffee, and not being able to use all the coffee and the coffee being wasted create a bad effect on the user. Moreover, due to the deformation of the capsule while being opened, not being able to fully cut the folio that closes the capsule results in the coffee not being fully discharged. The taste of the coffee being same at every brewing and the coffee inside the capsule not being wasted are among the desired features in a good coffee machine.

In the state of the art International Patent Application No. WO2012125032, a coffee machine comprising a boiling reservoir which is arranged to receive therein water and ground roasted coffee that has been discharged from the cartridge is disclosed.

In the state of the art International Patent Application No. WO2011007266, a coffee machine using capsules is disclosed.

In the state of the art Turkish Patent Application No. TR200100549, a coffee machine using capsules is disclosed.

The aim of the present invention is the realization of a coffee machine that can be operated in a safe manner.

The coffee machine realized in order to attain the aim of the present invention, as defined in independent claim 1, comprises a head that is disposed at the inner surface of the cover that enables the housing to be closed, and that enables a bumping move upper portion after the capsule is opened. In order to enable the capsule to be opened, the head exerts pressure to the capsule from the upper portion before the capsule is opened The head of the present invention enables the coffee holding inside the capsule to fall by performing a bumping move on the capsule after the capsule is opened by means of an opening means. In other words, the capsule is shaken up with the bumping move performed by the head.

According to the invention, the bumping move of the head is realized by means of a tension means that is disposed in the head, that stores the energy that realizes the bumping move by being compressed while the head exerts pressure to the capsule, and that enables the head to bump the upper portion of the capsule with the stored energy after the capsule is opened.

In another embodiment of the present invention, a centering gap is provided, that enables the capsule preferably produced from plastic material to be prevented from being warped or bent due to the rotation movement of the cover while the cover is being closed, and that realizes centering by partially contacting the edges of the capsule.

In another embodiment of the present invention, the side surface of the centering gap that is the farthermost to the rotational axis of the cover has a form that almost fully touches/bears against the side surface of the capsule in the housing when the cover is closed. By means of this embodiment, the capsule is prevented from being warped or bent as a result of the pressure that the head exerts to the capsule.

In another embodiment of the present invention, the head is positioned off the center of the centering gap in order to prevent the capsule from being warped and bent. In a version of this embodiment, the head is positioned so as to be closer to the side surface of the centering gap that almost touches the side surface of the capsule. By means of this embodiment, the head is prevented from sliding the capsule forward more during the rotational movement of the cover.

In another embodiment of the present invention, the capsule is prevented from sliding away from the housing while the cover is closed by means of a centering protrusion that is disposed at the end portion of the head and that provides centering by entering a gap that is arranged on the capsule.

In another embodiment of the present invention, the pressure that the head exerts and the intensity of the bumping move after the capsule is opened are increased by magnets that are oppositely positioned on the cover and on the body so as to attract each other. The coffee in the capsule is enabled to be almost fully discharged by increasing the impulse that the magnets and the head perform.

In another embodiment of the present invention, a sensor is disposed, that detects whether the capsule is placed into the housing or not. By means of the sensor, whether the capsule is present in the housing or not is easily detected. For example, when the user desires to brew coffee without placing the capsule to the housing, the situation is detected by means of the sensor and water is not transferred into the pot in which the coffee is brewed.

In the coffee machine of the present invention, the capsule is shaken up by the bump of the head on the capsule after the capsule is opened, and thus the coffee that holds onto the inner surfaces of the capsule is enabled to fall.

The coffee machine realized to attain the aim of the present invention is illustrated in the attached figures, where:

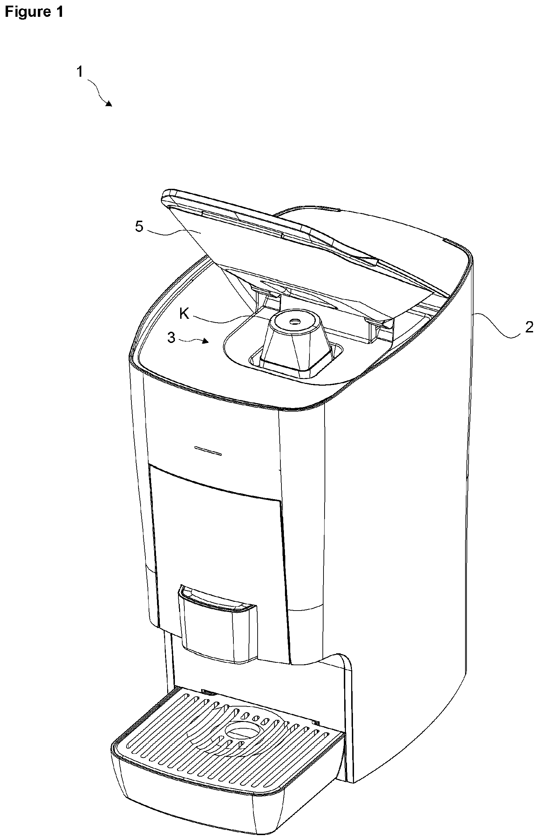

Figure 1 - is the perspective view of a coffee machine.

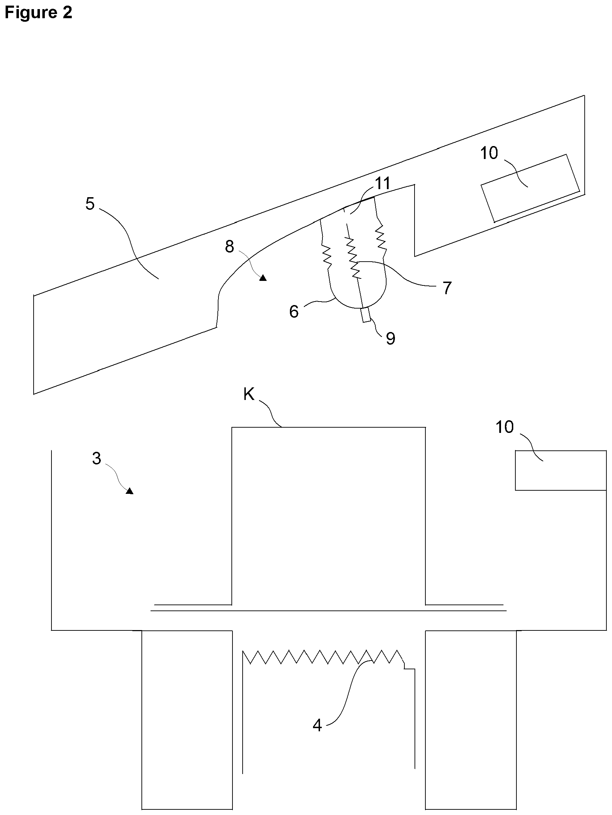

Figure 2 - is the sideways schematic view of the housing and the cover in an embodiment of the present invention.

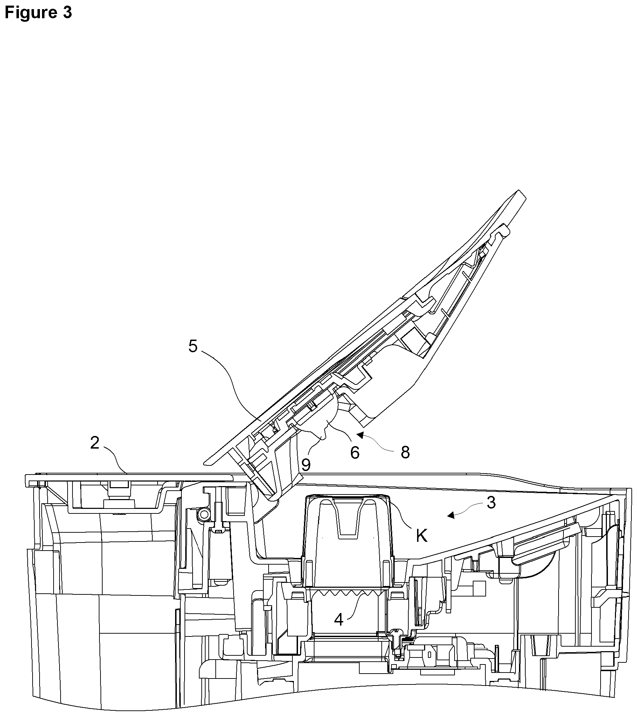

Figure 3 - is the sideways schematic view of the housing and the cover in another embodiment of the present invention.

The elements illustrated in the figures and the steps are numbered as follows:
1. Coffee machine
2. Body
3. Housing
4. Opening apparatus
5. Cover
6. Head
7. Tension means
8. Centering gap
9. Centering protrusion
10. Magnet
11. Sensor

### K. Capsule

The coffee machine (1) comprises a body (2); a housing (3) wherein preferably the single use capsule (K) is placed and that is disposed on the upper portion of the body (2); an opening apparatus (4) that enables the capsule (K) to be opened; a cover (5) that closes the top of the housing (3) when in the closed position, and that enables access to the housing (3) when in the open position, and a head (6) that is disposed on the lower surface of the cover (5) and that exerts pressure to the upper portion of the capsule (K) that is placed into the housing (3) while shifting from the open position to the closed position.

In the coffee machine (1), the user places the capsule (K) that contains single use coffee into the housing (3) and then enables the head (6) to exert pressure on the capsule (K) by closing the cover (5). The capsule (K) whereon the pressure is exerted is opened by contacting the opening apparatus (4) disposed in the housing (3). The coffee that falls from the capsule (K) port with the opening of the capsule (K) is brewed by being transferred into a pot (not shown in the figures), and the brewed coffee is serviced by being transferred into the cup. The cover (5) can shift between the open and closed positions by rotating around a rotational axis (not shown in the figures).

The coffee machine (1) of the present invention comprises the head (6) that applies an additional force to the capsule (K) as the capsule (K) which being under the pressure of the head (6) is opened by means of the opening apparatus (4). In the coffee machine (1) of the present invention, besides exerting pressure to the capsule (K) in order to enable the capsule (K) to be opened, the head (6) also enables the coffee that holds onto the inner surfaces of the capsule (K) in the capsule (K) to fall into the brewing pot (not shown in the figures) by bumping on the capsule (K) in other words by applying an additional force after the capsule (K) is opened. The coffee that holds onto the surfaces of the capsule (K) is discharged to a great extent by means of the additional bumping move that the head (6) realizes.

The coffee machine (1) comprises a tension means (7) that is disposed in the inner portion of the head (6), that is compressed while the head (6) exerts pressure to the capsule (K) that is placed in the housing (3), and that enables the additional force to be applied by becoming free and pushing the head (6) after the capsule (K) is opened. As the capsule (K) is placed in the housing (3) and the cover (5) is closed, the head (6) exerts pressure to the capsule (K) and in the meantime the tension means (7) disposed in the head (6) is compressed. After the opening of the capsule (K) by the opening apparatus (4) by means of the pressure exerted by the head (6), the tension force between the capsule (K) and the opening apparatus (4) is removed, and as a result the tension means (7) pushes the head (6) by becoming free, and the head (6) is enabled to realize an additional bumping move to the capsule (K). In other words, by opening the capsule (K), the opposite force, the resistance applied by the opening apparatus (4) to the capsule (K) disappears and the tension means (7) that is compressed in the head (6) can push the head (6), and indirectly the capsule (K).

In another embodiment of the present invention, the coffee machine (1) comprises a centering gap (8) wherein the head (6) is situated, that is arranged at the lower surface of the cover (5), and that prevents the capsule (K) from being deformed while the cover (5) is being closed by partially bearing against the side surfaces of the capsule (K). The cover (5) that enables the top of the housing (3) to be closed shifts from the open position to the closed position by performing a rotational movement from a hinge point (not shown in the figures). In the meantime, the head (6) that contacts the capsule (K) pushes the capsule (K) forward and causes the capsule (K) to slide and deform. By means of the centering gap (8), the problem of the capsule (K) being deformed and as a result not being fully opened, not being fully discharged is eliminated.

In another embodiment of the present invention, the side surface of the centering gap (8) that is farthermost to the rotational axis of the cover (5) is almost perpendicular. In this embodiment, by means of the side surface of the centering gap (8) that is close to the front portion of the body (2), in other words the side surface that is away from the rotation point, being designed almost in the perpendicular form, the capsule (K) is prevented from being deformed while the cover (5) is closed.

In another embodiment of the present invention, the head (6) is positioned so as to be eccentric from the middle point of the centering gap (8). In this embodiment, by being positioned a little away from the center of the centering gap (8), the head (6) prevents the capsule (K) from sliding during the closing of the cover (5).

In another embodiment of the present invention, the head (6) is positioned so as to be close to the side surface of the centering gap (8) that has a perpendicular form when the cover (5) is closed. By means of this embodiment, the intensity of the sliding force that the head (6) provides to the capsule (K) while the cover (5) is being closed is decreased, and with the side surface of the centering gap (8) that has a perpendicular form the capsule (K) is enabled to be opened without moving out of the alignment with the opening apparatus (4).

In another embodiment of the present invention, the coffee machine (1) comprises a centering protrusion (9) that is disposed at the end portion of the head (6) and that enables the capsule (K) to be centered and prevents the same from sliding by being seated into a gap (not shown in the figures) on the capsule (K). While the cover (5) is being closed, the centering protrusion (9) enters the gap on the capsule (K) and the capsule (K) is prevented from being deformed.

In another embodiment of the present invention, the coffee machine (1) comprises two magnets (10), one disposed on each of the cover (5) and the body (2) oppositely so as to attract each other when the cover (5) is closed, and that enable the intensity of the pressure exerted by the head (6) to be increased. As the cover (5) and the body (2) get close to each other while the cover (5) is being closed, the attraction force between the magnets (10) increases, and thus although the user tries to slowly close the cover (5), the cover (5) closes fast with the effect of the magnets (10). Thus, the capsule (K) is enabled to be opened fast by the opening apparatus (4), and at the same time the pressure and the bump provided by the head (6) are enabled to be more intense. In this embodiment, the capsule (K) is enabled to be efficiently opened and discharged by means of the low-cost magnets (10).

In another embodiment of the present invention, the coffee machine (1) comprises a sensor (11) that is disposed in the head (6), that is triggered by the bumping move, thus detecting whether the capsule (K) is placed into the housing (3) or not. In the coffee machine (1), a sensor (11) is used, that is positioned in the head (6) in order to detect whether the capsule (K) is placed therein or not, and that is triggered by the bumping move that the head (6) performs. Thus, since the head (6) cannot realize the bumping move when the cover (5) is closed when the capsule (K) is not present in the housing (3), the absence of the capsule (K) in the housing (3) can easily be detected.

In another embodiment of the present invention, the coffee machine (1) is suitable to brew Turkish coffee. The coffee is brewed in the brewing chamber (4) and is transferred into the cup.

In the coffee machine (1) of the present invention, by means of the additional bump that is applied by the head (6) to the capsule (K) after the capsule (K) is opened, the coffee in the capsule (K) is enabled to be spilled/discharged.

## Claims

1. - A coffee machine (1), **comprising** a body (2); a housing (3) that is disposed on the upper portion of the body (2) wherein a preferably single use capsule is placed; an opening apparatus (4) configured to enable the capsule (K) to be opened; a cover (5) configured to close the top of the housing (3) when in the closed position, and configured to enable access to the housing (3) when in the open position, and a head (6) that is disposed on the lower surface of the cover (5) and configured to exert pressure to the upper portion of the capsule (K) when it is placed into the housing (3) while shifting from the open position to the closed position, wherein a tension means (7) is disposed in the inner portion of the head (6), said tension means is configured to be compressed while the head (6) exerts pressure to the capsule (K) that is placed in the housing (3), and said tension means is configured to enable an additional force to be applied by becoming free and pushing the head (6) after the capsule (K) is opened by the opening apparatus (4), said additional force being a bumping move configured to be applied to the capsule (K) from the upper portion after the capsule (K) is opened and configured to enable the coffee held inside of the capsule to fall.

2. - A coffee machine (1) as in claim 1, **characterized by** a centering gap (8) wherein the head (6) is situated, that is arranged at the lower surface of the cover (5), and that is configured to prevent the capsule (K) from being deformed while the cover (5) is being closed by partially bearing against the side surfaces of the capsule (K).

3. - A coffee machine (1) as in claim 2, **characterized by** the centering gap (8) of which the side surface that is farthermost to the rotational axis of the cover (5) is almost perpendicular that the side surface of the centering gap (8) that is configured to almost fully touch or bear against the side surface of the capsule (K) in the housing (3) when the cover (5) is closed.

4. - A coffee machine (1) as in claim 3, **characterized by** the head (6) that is eccentrically positioned from the middle point of the centering gap (8).

5. - A coffee machine (1) as in claim 4, **characterized by** the head (6) that is positioned so as to be close to the side surface of the centering gap (8) that has a perpendicular form when the cover (5) is closed.

6. - A coffee machine (1) as in any one of the above claims, **characterized by** a centering protrusion (9) that is disposed at the end portion of the head (6), and that is configured to enable the capsule (K) to be centered and to prevent the same from sliding by being seated into a gap arranged on the capsule (K).

7. - A coffee machine (1) as in any one of the above claims, **characterized by** two magnets (10), one disposed on each of the cover (5) and the body (2) oppositely so as to attract each other when the cover (5) is closed, said magnets being configured to enable the intensity of the pressure exerted by the head (6) to be increased.

8. - A coffee machine (1) as in any one of the above claims, **characterized by** a sensor (11) that is disposed in the head (6), said sensor being configured to be triggered by the bumping move, thus detecting whether the capsule (K) is placed into the housing (3) or not.

## Patentansprüche

1. -Eine Kaffeemaschine (1), umfasst einen Körper (2); ein Gehäuse (3), das auf dem oberen Abschnitt des Körpers (2) angeordnet ist, in dem eine vorzugsweise Einwegkapsel platziert ist; eine Öffnungsvorrichtung (4), die konfiguriert ist, um zu ermöglichen, dass die Kapsel (K) geöffnet wird; eine Abdeckung (5), die so konfiguriert ist, dass sie die Oberseite des Gehäuses (3) schließt, wenn sie sich in der geschlossenen Position befindet, und die so konfiguriert ist, dass sie einen Zugang zum Gehäuse (3) ermöglicht, wenn sie sich in der offenen Position befindet, und einen Kopf (6), der auf der unteren Oberfläche der Abdeckung (5) angeordnet und so konfiguriert ist, dass er Druck auf den oberen Abschnitt der Kapsel (K) ausübt, wenn sie in das Gehäuse (3) platziert wird, während sie aus der offenen Position in die geschlossene Position verschoben wird, wobei ein Spannmittel (7) in dem inneren Abschnitt des Kopfes (6) angeordnet ist, wobei das Spannmittel so konfiguriert ist, dass es zusammengedrückt wird, während der Kopf (6) Druck auf die Kapsel (K) ausübt, die in dem Gehäuse (3) angeordnet ist und das Spannmittel konfiguriert ist, um zu ermöglichen, dass eine zusätzliche Kraft aufgebracht wird, indem es frei wird und den Kopf (6) drückt, nachdem die Kapsel (K) durch die Öffnungsvorrichtung (4) geöffnet wurde, wobei die zusätzliche Kraft eine Stoßbewegung ist, die konfiguriert ist, um auf die Kapsel (K) von dem oberen Abschnitt aufgebracht zu werden, nachdem die Kapsel (K) geöffnet ist, und konfiguriert ist, um zu ermöglichen, dass der in der Kapsel enthaltene Kaffee herunterfällt.

2. - Eine Kaffeemaschine (1), wie in Anspruch 1 aufgeführt, **ist dadurch gekennzeichnet, dass** einen Zentrierspalt (8), in dem sich der Kopf (6) befindet, an der unteren Oberfläche der Abdeckung (5) angeordnet ist und der konfiguriert ist, um zu verhindern, dass die Kapsel (K) verformt wird, während die Abdeckung (5) durch teilweises Anliegen an den Seitenflächen der Kapsel (K) geschlossen wird.

3. - Eine Kaffeemaschine (1), wie in Anspruch 2 aufgeführt, **ist dadurch gekennzeichnet, dass** der Zentrierspalt (8), dessen Seitenfläche, die am weitesten von der Drehachse des Deckels (5) entfernt ist, nahezu senkrecht zu der Seitenfläche des Zentrierspalts (8) steht, der so ausgebildet ist, dass er bei geschlossenem Deckel (5) nahezu vollständig an der Seitenfläche der Kapsel (K) im Gehäuse (3) anliegt.

4. - Eine Kaffeemaschine (1), wie in Anspruch 3 aufgeführt, **ist dadurch gekennzeichnet, dass** der Kopf (6) vom Mittelpunkt des Zentrierspalts (8) exzentrisch positioniert ist.

5. - Eine Kaffeemaschine (1), wie in Anspruch 4 aufgeführt, **ist dadurch gekennzeichnet, dass** das der Kopf (6) nahe der Seitenfläche des Zentrierspalts (8) positioniert ist, der bei geschlossenem Deckel (5) eine senkrechte Form hat.

6. - Eine Kaffeemaschine (1), wie in einem der vorherigen Ansprüchen aufgeführt, **ist dadurch gekennzeichnet, dass** das Zentriervorsprung (9), der am Endabschnitt des Kopfes (6) angeordnet ist, und die dazu ausgebildet ist, die Kapsel (K) durch Einsetzen in einen an der Kapsel (K) angeordneten Spalt zu zentrieren und gegen Verrutschen zu sichern.

7. - Eine Kaffeemaschine (1), wie in einem der vorherigen Ansprüchen aufgeführt, **ist dadurch gekennzeichnet, dass** zwei Magneten (10) von denen jeweils einer an der Abdeckung (5) und dem Körper (2) gegenüberliegend angeordnet ist, um sich gegenseitig anzuziehen, wenn die Abdeckung (5) geschlossen ist, wobei die Magnete konfiguriert sind, um zu ermöglichen, dass die Intensität des durch den Kopf (6) ausgeübten Drucks erhöht wird.

8. - Eine Kaffeemaschine (1), wie in einem der vorherigen Ansprüchen aufgeführt, **ist dadurch gekennzeichnet, dass** das Sensor (11), der in dem Kopf (6) angeordnet ist, wobei der Sensor so konfiguriert ist, dass er durch die Stoßbewegung ausgelöst wird und somit erfasst, ob die Kapsel (K) in das Gehäuse (3) platziert ist oder nicht.

## Revendications

1. - Une machine à café (1), **comprenant** un corps (2) ; un logement (3) qui est disposé sur la partie supérieure du corps (2) dans lequel une capsule de préférence à usage unique est placée ; un appareil d'ouverture (4) configuré pour permettre à la capsule (K) d'être ouverte ; un couvercle (5) configuré pour fermer la partie supérieure du logement (3) lorsqu'il est dans la position fermée, et configuré pour permettre l'accès au logement (3) lorsqu'il est dans la position ouverte, et une tête (6) qui est disposée sur la surface inférieure du couvercle (5) et configurée pour exercer une pression sur la partie supérieure de la capsule (K) lorsqu'elle est placée dans le logement (3) tout en passant de la position ouverte à la position fermée, dans lequel un moyen de tension (7) est disposé dans la partie interne de la tête (6), ledit moyen de tension est configuré pour être comprimé pendant que la tête (6) exerce une pression sur la capsule (K) qui est placée dans le logement (3), et ledit moyen de tension est configuré pour permettre à une force supplémentaire d'être appliquée en devenant libre et en poussant la tête (6) après que la capsule (K) a été ouverte par le dispositif d'ouverture (4), ladite force supplémentaire étant un mouvement de choc configuré pour être appliqué à la capsule (K) depuis la partie supérieure après que la capsule (K) a été ouverte et configuré pour permettre au café contenu à l'intérieur de la capsule de tomber.

2. - Une machine à café (1) comme dans la déclaration 1, **caractérisée par** un espace de centrage (8) dans lequel la tête (6) est située, qui est disposé à la surface inférieure du couvercle (5), et qui est configuré pour empêcher la capsule (K) d'être déformée pendant que le couvercle (5) est fermé en s'appuyant partiellement contre les surfaces latérales de la capsule (K).

3. - Une machine à café (1) comme dans la déclaration 2, **caractérisée par** l'espace de centrage (8) dont la surface latérale qui est la plus éloignée de l'axe de rotation du couvercle (5) est presque perpendiculaire à la surface latérale de l'espace de centrage (8) qui est configurée pour toucher ou porter presque entièrement contre la surface latérale de la capsule (K) dans le logement (3) lorsque le couvercle (5) est fermé.

4. - Une machine à café (1) comme dans la déclaration 3, **caractérisée par** la tête (6) qui est positionnée de manière excentrique à partir du point central de l'espace de centrage (8).

5. - Une machine à café (1) comme dans la déclaration 4, **caractérisée par** la tête (6) qui est positionnée de manière à être proche de la surface latérale de l'espace de centrage (8) qui a une forme perpendiculaire lorsque le couvercle (5) est fermé.

6. - Une machine à café (1) comme dans l'une quelconque des déclarations précédentes, **caractérisée par** une saillie de centrage (9) qui est disposée à la partie d'extrémité de la tête (6), et qui est configurée pour permettre à la capsule (K) d'être centrée et pour empêcher celle-ci de glisser en étant logée dans un espace disposé sur la capsule (K).

7. - Une machine à café (1) comme dans l'une quelconque des déclarations précédentes, **caractérisée par** deux aimants (10), un disposé sur chacun du couvercle (5) et du corps (2) de manière opposée afin de s'attirer l'un l'autre lorsque le couvercle (5) est fermé, lesdits aimants étant configurés pour permettre d'augmenter l'intensité de la pression exercée par la tête (6).

8. - Une machine à café (1) comme dans l'une quelconque des déclarations précédentes, **caractérisée par** un capteur (11) qui est disposé dans la tête (6), ledit capteur étant configuré pour être déclenché par le mouvement de cognement, détectant ainsi si la capsule (K) est placée dans le logement (3) ou non.
